# FASCICULE DE BREVET EUROPEEN

(11) **EP 2 394 547 B1**
(45) Date de publication et mention de la délivrance du brevet: **11.12.2013**
(21) Numéro de dépôt: 11305694.9
(22) Date de dépôt: 06.06.2011
(51) Int. Cl.: A47J 43/07

(54) **Appareil électroménager de préparation culinaire comportant un récipient de travail fermé par un couvercle amovible**
Elektrohaushaltsgerät zur Essenszubereitung, das aus einem mit einem abnehmbaren Deckel verschlossenen Arbeitsbehälter besteht
Electrical kitchen appliance comprising a work container sealed by a removable cover

(30) Priorité: 08.06.2010 FR 1054506
(43) Date de publication de la demande: 14.12.2011
(73) Titulaire: Seb S.A., 69130 Ecully (FR)
(72) Inventeur: Paumard, Jonathan, 53470 Martigne Sur Mayenne (FR); Sauniere, Damien, 53300 Ambrieres les Vallées (FR); Pommerel, Vincent, 61000 Alençon (FR)
(74) Mandataire: Bourrières, Patrice

(56) Documents cités:
- EP-A1- 0 699 409

## Description

La présente invention se rapporte au domaine technique général des appareils électroménagers de préparation culinaire comportant un récipient de travail fermé par un couvercle amovible et comportant un boîtier comprenant un socle de réception du récipient de travail, le boîtier renfermant un moteur pour l'entraînement d'un outil rotatif disposé dans le récipient de travail, et se rapporte plus particulièrement à un appareil électroménager comportant des moyens de maintien du couvercle en position fermée s'activant automatiquement lors de la fermeture du couvercle par un mouvement rectiligne en direction du récipient de travail.

Un tel appareil est connu du document EP 0 699 409.

Il est connu, de la demande de brevet WO 99/17647 déposée par la demanderesse, un appareil de préparation culinaire comprenant un récipient de travail fermé par un couvercle amovible et un boîtier moteur comportant un socle de réception du récipient de travail. Dans ce document, l'appareil comporte des moyens de maintien du couvercle en position fermée s'activant automatiquement lorsque le couvercle est fermé par un mouvement rectiligne en direction du récipient de travail. Ces moyens de maintien sont constitués par deux mâchoires disposées symétriquement par rapport à l'axe vertical du récipient, les mâchoires étant portées par deux bras s'étendant de part et d'autre du récipient de travail.

Un tel dispositif de maintien présente l'avantage de permettre un verrouillage automatique du couvercle en position fermée par un simple mouvement de translation du couvercle coaxialement au récipient de travail.

Cependant, un tel dispositif de maintien du couvercle au moyen de mâchoires présente l'inconvénient d'être relativement coûteux et de nécessiter la présence d'un bâti relativement volumineux s'étendant de part et d'autre du récipient de travail qui n'est pas très esthétique.

Aussi, un but de la présente invention est de remédier à ces inconvénients en proposant un appareil électroménager de préparation culinaire comportant des moyens de maintien du couvercle en position fermée qui soient peu visibles de manière à pouvoir être facilement intégrés esthétiquement dans l'appareil tout en étant simples et économiques à mettre en oeuvre. Un autre but de la présente invention est de proposer des moyens de maintien du couvercle en position fermée qui assurent une bonne immobilisation du couvercle et qui puissent être localisés en un seul point de la périphérie du couvercle.

A cet effet, l'invention se rapporte à un appareil électroménager de préparation culinaire comportant un récipient de travail fermé par un couvercle amovible et un boîtier comprenant un socle de réception du récipient de travail, le boîtier renfermant un moteur pour l'entraînement d'un outil rotatif disposé dans le récipient de travail, l'appareil comportant des moyens de maintien du couvercle en position fermée s'activant automatiquement lorsque le couvercle est fermé par un mouvement de translation rectiligne en direction du récipient de travail, caractérisé en ce que les moyens de maintien comportent un palier dans lequel vient s'introduire une tige portée par le couvercle, le palier assurant un guidage en translation rectiligne du couvercle en direction du récipient de travail lors de la fermeture du couvercle.

Une telle caractéristique permet de garantir un guidage et un maintien du couvercle parallèlement au bord supérieur du récipient de travail par un élément peu encombrant pouvant facilement être intégré dans le boîtier de l'appareil, en étant localisé qu'en un seul point de la périphérie du couvercle, un tel guidage en translation offrant une bonne ergonomie d'utilisation lors de la fermeture du couvercle.

Selon une autre caractéristique de l'invention, les moyens de maintien comportent un dispositif de blocage de la tige dans une position de fermeture du couvercle.

Une telle caractéristique présente l'avantage de permettre une immobilisation complète du couvercle en position fermée sur le récipient de travail au moyen d'un dispositif de blocage qui est déporté au niveau de la tige et qui peut donc être intégré dans le boîtier.

Selon une autre caractéristique de l'invention, les moyens de maintien comportent un bouton de déverrouillage permettant de désactiver ledit dispositif de blocage.

Selon une autre caractéristique de l'invention, le dispositif de blocage comporte un chariot mobile en translation entre une position de verrouillage, dans laquelle la tige du couvercle est bloquée en translation dans la position de fermeture du couvercle, et une position de déverrouillage, dans laquelle la tige du couvercle peut coulisser librement dans le palier, le chariot étant ramené par des moyens de rappel dans la position de verrouillage.

Selon encore une autre caractéristique de l'invention, le bouton de déverrouillage permet de déplacer manuellement le chariot à l'encontre des moyens de rappel vers la position de déverrouillage.

Selon encore une autre caractéristique de l'invention, le dispositif de blocage comporte un élément d'arrêt bloquant la translation de ladite tige à l'intérieur du palier lorsque le couvercle est en position fermée.

Selon une autre caractéristique de l'invention, l'élément d'arrêt est porté par le chariot et vient s'engager dans une forme de la tige du couvercle adaptée pour immobiliser axialement cette dernière lorsque le chariot est déplacé de sa position de déverrouillage vers sa position de verrouillage.

Selon une autre caractéristique de l'invention, le chariot vient actionner un interrupteur de sécurité lorsqu'il est en position de verrouillage, le fonctionnement du moteur étant autorisé seulement lorsque l'interrupteur est actionné.

Selon une autre caractéristique de l'invention, l'appareil comporte un dispositif de blocage du chariot en position de déverrouillage qui est actif lorsque le récipient de travail n'est pas disposé sur le socle, le dispositif de blocage étant désactivé par la mise en place du récipient de travail sur le socle.

Selon une autre caractéristique de l'invention, le couvercle est ramené par des moyens de rappel dans une position d'attente dans laquelle le couvercle est surélevé par rapport à la position de fermeture et dans laquelle une partie de la tige reste engagée dans le palier.

Selon une autre caractéristique de l'invention, le couvercle comporte une jupe inférieure qui reste partiellement engagée dans le récipient de travail lorsque le couvercle est en position d'attente.

Selon une autre caractéristique de l'invention, le couvercle peut occuper une position d'ouverture dans laquelle une partie de la tige reste engagée dans le palier et dans laquelle le couvercle peut pivoter autour de la tige de manière à libérer l'accès au contenu du récipient de travail.

Selon une autre caractéristique de l'invention, le boîtier comporte un caisson s'étendant latéralement au récipient de travail, le palier étant porté par le caisson.

Selon une autre caractéristique de l'invention, le palier débouche à l'extérieur du caisson à hauteur de l'extrémité supérieure du récipient de travail lorsque ce dernier est disposé sur le socle.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue en perspective d'un appareil électroménager de préparation culinaire selon un mode particulier de réalisation de l'invention,
- la figure 2 est une vue en perspective du boîtier de l'appareil électroménager de la figure 1 représenté seul, le dispositif de verrouillage du couvercle étant représenté en pointillé,
- les figures 3A et 3B sont des vues en perspective de l'appareil électroménager de la figure 1 avec le couvercle respectivement représenté en position ouverte et en position fermée, le boîtier étant représenté de façon transparente de manière à laisser apparaître la plaque de fond du boîtier et le dispositif de verrouillage du couvercle,
- la figure 4 est une vue en perspective de la plaque de fond du boîtier et du dispositif de verrouillage du couvercle,
- la figure 5 est une vue en perspective éclatée du dispositif de verrouillage du couvercle contenu dans le boîtier,
- la figure 6 est une vue en perspective de l'appareil électroménager de la figure 1 avec le couvercle représenté dans une position d'ouverture après soulèvement et pivotement du couvercle autour de la tige,
- la figure 7 est une vue de dessus du boîtier moteur de l'appareil de la figure 1,
- les figures 8A et 8B sont respectivement des vues en coupe selon les lignes A-A et B-B du boîtier de l'appareil de la figure 7 lorsque le récipient de travail n'est pas présent sur le socle du boîtier,
- les figures 9A et 9B sont respectivement des vues en coupe selon les lignes A-A et B-B du boîtier de l'appareil de la figure 7 lorsque le récipient de travail est disposé sur le socle du boîtier avec le couvercle en position d'attente, dans une position légèrement surélevée par rapport à la position de fermeture.
- les figures 10A et 10B sont respectivement des vues en coupe selon les lignes A-A et B-B du boîtier de l'appareil de la figure 7 lorsque le récipient de travail est disposé sur le socle du boîtier avec le couvercle en position de fermeture.

Seuls les éléments nécessaires à la compréhension de l'invention ont été représentés. Pour faciliter la lecture des dessins, les mêmes éléments portent les mêmes références d'une figure à l'autre.

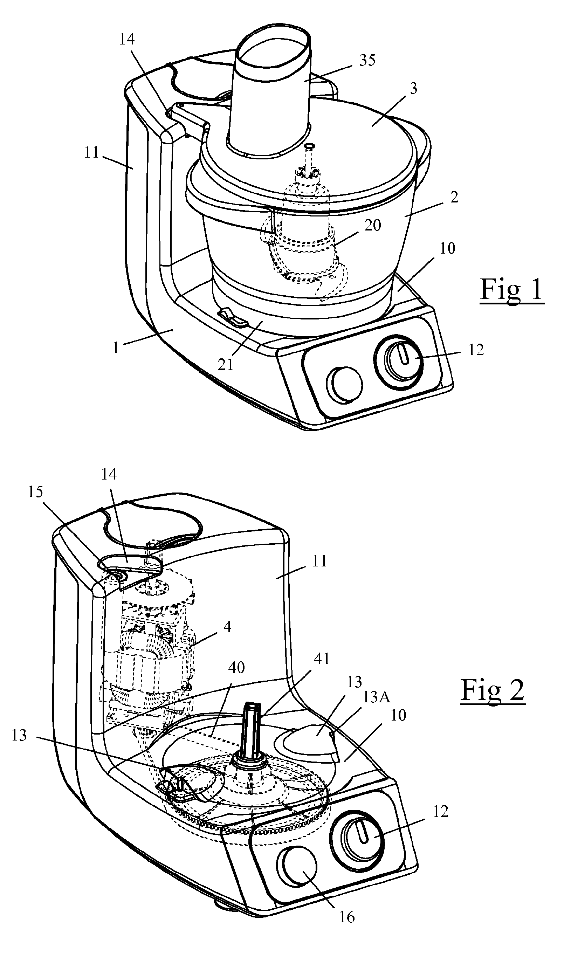

La figure 1 représente un appareil de préparation culinaire comportant un boîtier 1 comprenant un socle 10 supportant un récipient de travail 2 fermé par un couvercle 3 amovible comprenant une goulotte d'alimentation 35, le récipient de travail 2 étant monté de manière amovible sur le socle 10 et renfermant un outil rotatif 20, représenté en pointillé sur cette figure.

Conformément à la figure 2, le boîtier 1 comporte un caisson 11 s'élevant verticalement à l'arrière du boîtier 1 et en bordure du socle 10, le caisson 11 renfermant, de manière connue en soi, un moteur 4 relié par une courroie de transmission 40 à un entraîneur 41 faisant saillie au centre du socle 10.

Le fonctionnement du moteur 4 est contrôlé au moyen d'un bouton de commande 12 disposé sur une face avant du boîtier 1 et le socle 10 comporte deux bossages 13 disposés symétriquement par rapport à l'entraîneur 41, ces bossages 13 venant s'engager à l'intérieur d'une embase 21 du récipient de travail 2 lorsque ce dernier est amené sur le socle 10 par un mouvement vertical. Les bossages 13 comportent chacun une nervure verticale 13A venant coopérer avec une rainure de forme complémentaire, non visible sur les figures, formée sur la surface intérieure de l'embase 21 du récipient de travail, pour assurer un blocage en rotation du récipient de travail 2 lorsque ce dernier repose sur le socle 10.

De manière avantageuse, le caisson 11 comporte une face supérieure comprenant une échancrure 14 de forme générale triangulaire destinée à recevoir un bras 30 constitué par une excroissance radiale du couvercle 3, visible sur la figure 1, l'échancrure 14 comprenant une surface de fond au niveau de laquelle débouche un palier 15 supporté par le caisson 11 et orienté parallèlement à l'axe longitudinal du récipient de travail 2. A titre d'exemple, le palier 15 est réalisé en matériau thermoplastique du type POM (polyoxyméthylène) et présente une longueur de l'ordre de 6 cm pour un diamètre intérieur de l'ordre de 8 mm.

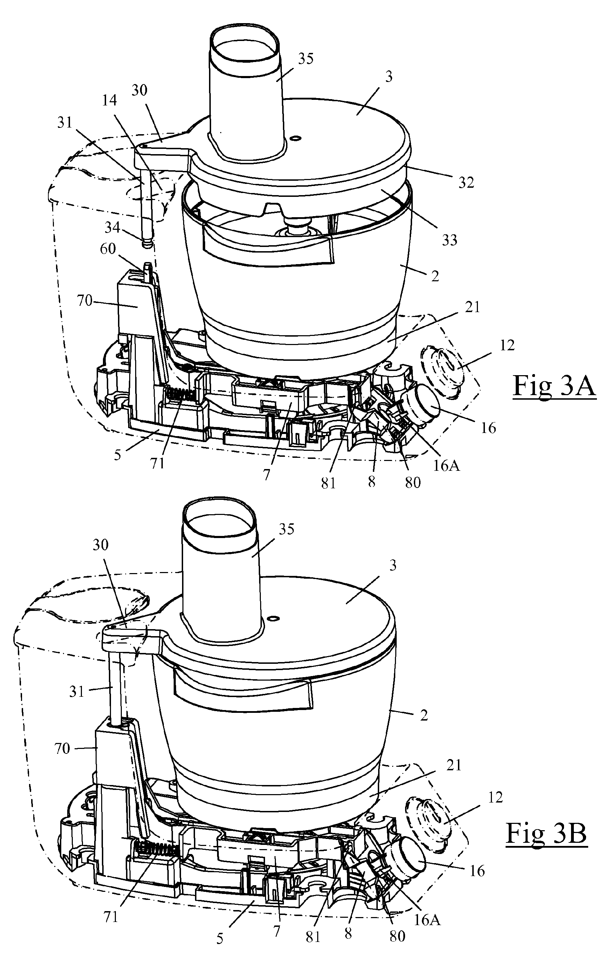

Conformément aux figures 3A et 3B, le bras du couvercle 3 comporte une tige 31 prévue pour s'engager dans le palier 15 du boîtier 1, cette tige 31 s'étendant perpendiculairement à un plan de fermeture du couvercle 3 défini par un épaulement périphérique 32, le couvercle 3 comportant une jupe inférieure 33 venant s'introduire à l'intérieur du récipient de travail 2 lorsque l'épaulement périphérique 32 repose sur le bord supérieur du récipient de travail 2, ainsi que cela est illustré sur la figure 3B.

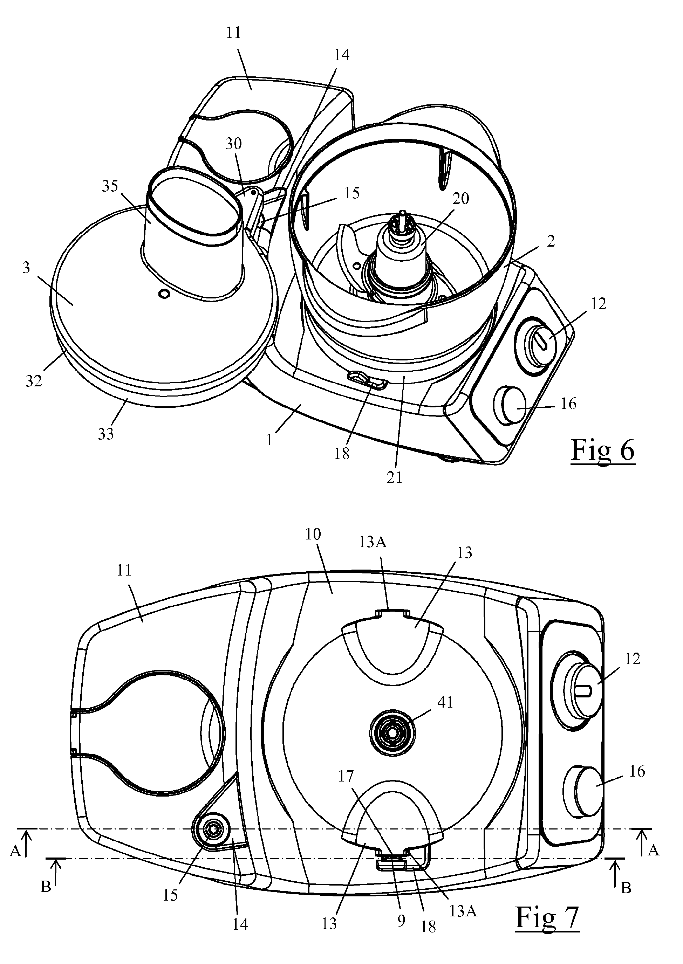

De cette manière, lorsque la tige 31 est engagée dans le palier 15, le couvercle 3 ne peut se déplacer librement que selon un mouvement de translation le long de l'axe longitudinal du palier 15 ou éventuellement selon un mouvement de rotation autour de cet axe lorsque la jupe inférieure 33 n'est pas encore engagée à l'intérieur du récipient de travail 2, ainsi que cela est illustré sur la figure 6.

A titre d'exemple, la tige 31 est réalisée en matériau du type inox et présente une longueur de l'ordre de 7 cm faisant saillie à l'extérieur du bras et un diamètre extérieur de l'ordre de 4 mm.

De manière avantageuse, la tige 31 présente une extrémité inférieure arrondie facilitant l'introduction de la tige 31 dans le palier 15, cette extrémité arrondie étant surmontée d'une gorge 34 d'une profondeur de l'ordre de 0.5 mm qui vient coopérer avec un dispositif de verrouillage intégré dans le boîtier 1.

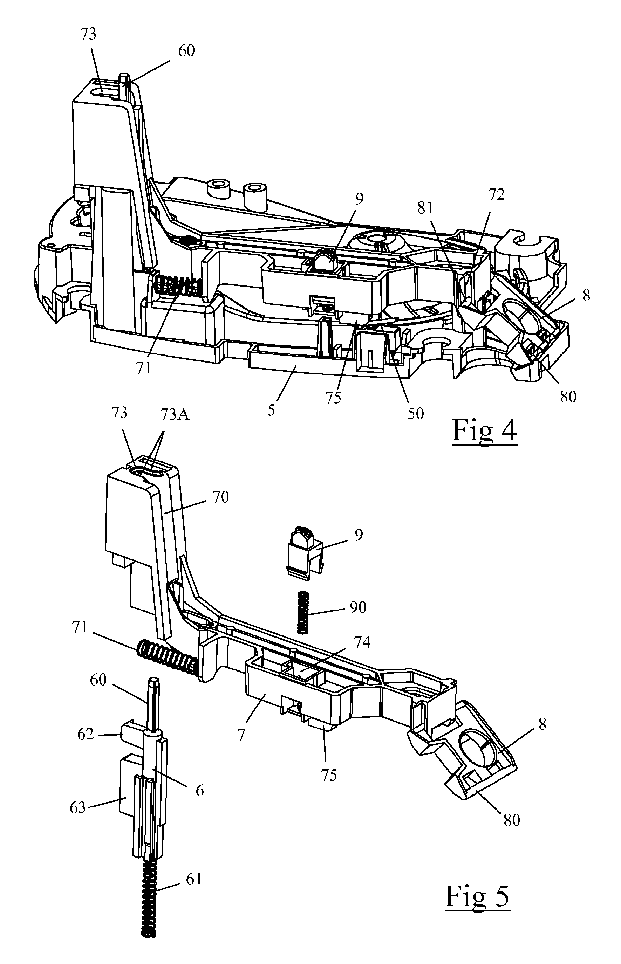

Le dispositif de verrouillage, mieux visible sur les figures 4 et 5, comporte un loquet 6 comportant un doigt 60 cylindrique venant dans le prolongement du palier 15, le loquet 6 s'étendant au travers d'un logement 70, présentant la forme d'une colonne, disposé à une extrémité d'un chariot 7 mobile en translation parallèlement à une plaque de fond 5 du boîtier 1. Le loquet 6 est guidé verticalement sur la plaque de fond 5 et peut coulisser verticalement au travers du logement 70 du chariot 7 entre une position relevée illustrée à la figure 3A, vers laquelle il est ramené par un ressort de rappel 61, et une position enfoncée illustrée à la figure 3B, dite position de verrouillage, vers laquelle il est amené lorsque la tige 31 exerce une pression sur le loquet 6 lors de la fermeture du couvercle 3.

Le chariot 7 peut se déplacer perpendiculairement au loquet 6 entre une position de verrouillage, illustrée à la figure 3B, vers laquelle il est ramené par un ressort de rappel 71, et une position de déverrouillage, illustrée à la figure 3A, vers laquelle il peut être amené en exerçant une pression manuelle sur un bouton de déverrouillage 16, de type bouton poussoir, présent sur la face avant du boîtier 1 de l'appareil. Le bouton de déverrouillage 16 comporte à cet effet un ergot d'actionnement 16A venant appuyer contre un basculeur 8 comportant une première extrémité munie d'un axe 80 monté pivotant sur la plaque de fond 5 et une seconde extrémité munie d'axes 81 coulissant à l'intérieur d'une glissière 72 formée sur l'extrémité avant du chariot 7.

Conformément aux figures 4 et 5, le logement 70 dans lequel coulisse le loquet 6 est ouvert en direction de la face avant du boîtier 1 et comporte une paroi supérieure comprenant une encoche 73 ouverte vers l'avant, en forme de U, dont les bords 73A sont distants de l'ordre de 3 mm et sont adaptés pour venir s'engager dans la gorge 34 de la tige 31 lorsque le chariot 7 est déplacé de la position de déverrouillage à la position de verrouillage.

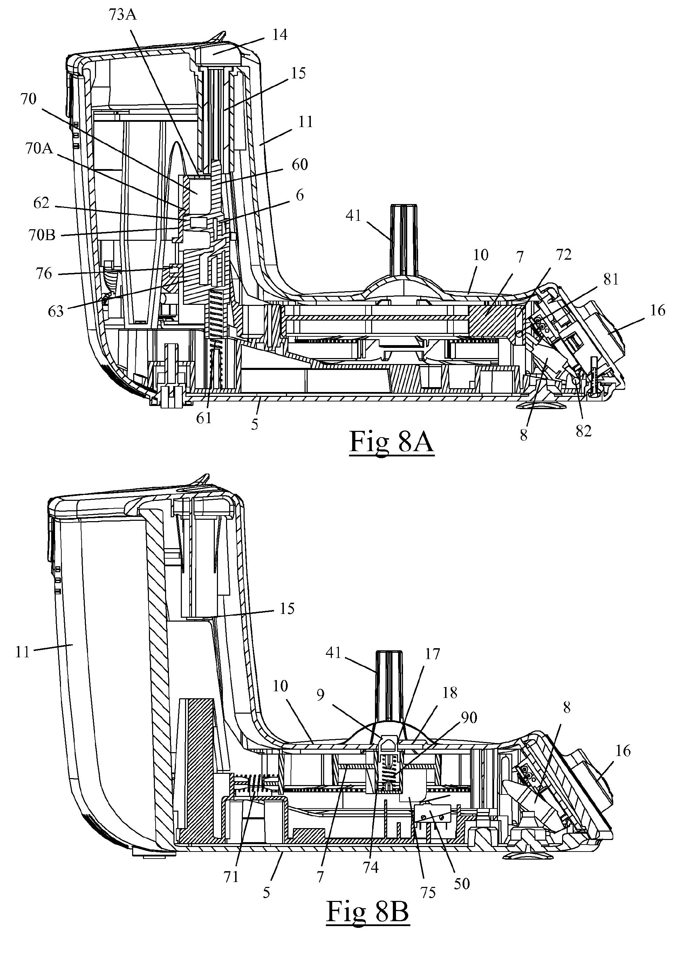

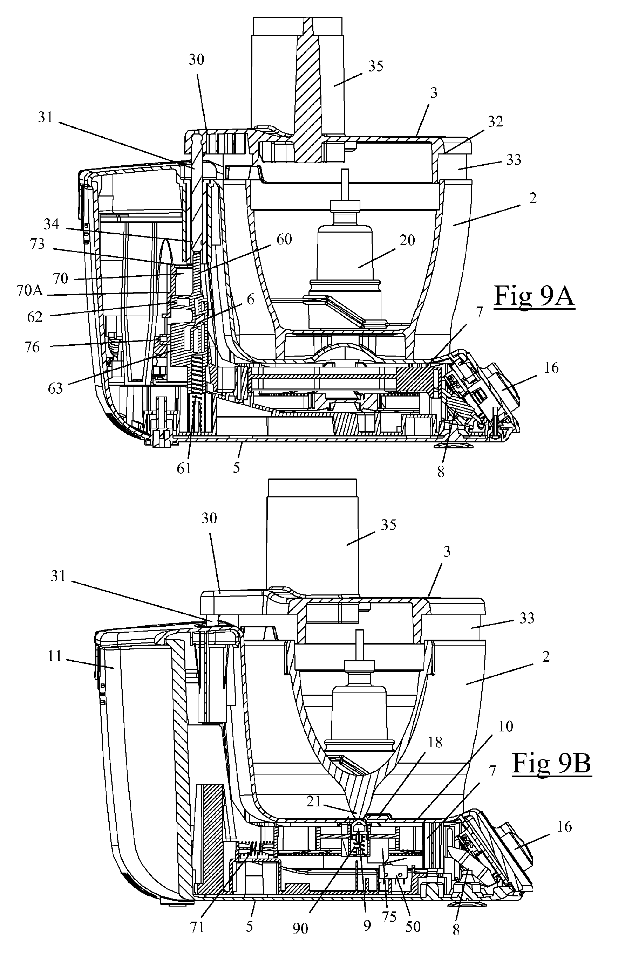

De manière préférentielle, le chariot 7 comporte également une cavité 74 dans laquelle est disposé un verrou 9 de sécurité qui peut coulisser verticalement entre une position de repos, illustrée sur la figure 8B, vers laquelle il est ramené par un ressort de rappel 90 et une position enfoncée, illustrée sur la figure 9B, vers laquelle il est amené lorsque le récipient de travail 2 est disposé sur le socle 10, la tête du verrou 9 faisant saillie au travers d'une ouverture 17 du socle 10 disposée en bordure d'un des bossages 13, dans une zone venant en regard du bord inférieur de l'embase 21 du récipient de travail 2, lorsque le chariot 7 est en position de déverrouillage et que le verrou 9 est en position de repos.

De cette manière, le déplacement en translation du chariot 7 vers sa position de verrouillage est rendu impossible par le blocage réalisé par le verrou 9 lorsque le récipient de travail 2 n'est pas en place sur le socle 10, même si la tige 31 du couvercle 3 est engagée dans le palier 15 du boîtier 1 et exerce une pression sur le doigt 60 du loquet 6.

Lorsque le récipient de travail 2 est mis en place sur le socle 10, le verrou 9 se trouve déplacé dans la position enfoncée par le bord inférieur de l'embase 21 du récipient de travail 2 et la tête du verrou 9 se trouve sous un renflement 18 du socle 10 de sorte le chariot 7 peut alors coulisser vers sa position de verrouillage sans être bloqué par le verrou 9.

Conformément à la figure 4, le chariot 7 comporte également une came inférieure 75 qui vient actionner un interrupteur de sécurité 50 lorsque le chariot 7 est en position de verrouillage, cet interrupteur de sécurité 50 étant relié au circuit d'alimentation du moteur pour empêcher le fonctionnement du moteur lorsque le chariot 7 n'est pas en position de verrouillage.

Le fonctionnement de l'appareil va maintenant être décrit en relation avec les figures 8A à 10B.

Conformément à la figure 8A, lorsque le couvercle 3 n'est pas en place sur le caisson 11 du boîtier 1, le loquet 6 est amené en position relevée par le ressort de rappel 61 et le doigt 60 se trouve alors partiellement engagé dans le palier 15, le loquet 6 étant immobilisé dans cette position relevée par l'entrée en contact d'une butée 62 portée par le loquet 6 avec un épaulement 70A d'une paroi du logement 70.

Dans cette position relevée du loquet 6, le chariot 7 est immobilisé dans la position de déverrouillage par une paroi 70B du logement 70 qui vient latéralement au contact de la butée 62 du loquet 6 mais également par la présence d'un bras transversal 76 porté par le chariot 7 qui vient buter contre une partie postérieure 63 du loquet 6.

En l'absence de récipient de travail 2 sur le socle 10, le chariot 7 est également immobilisé par l'introduction du verrou 9 au travers de l'ouverture 17 du socle 10 sous l'effet du ressort de rappel 90, ainsi que cela est visible sur la figure 8B.

Conformément à la figure 9B, lorsque le récipient de travail 2 est disposé sur le socle 10, le verrou 9 se trouve déplacé vers la position enfoncée par la pression exercée par le récipient de travail 2 de sorte que la tête du verrou 9 se trouve sous le niveau du renflement 18 du socle 10 et ne bloque plus en translation le chariot 7 en direction de la position de déverrouillage.

Ainsi, le couvercle 3 peut être amené par l'utilisateur sur le récipient de travail 2 en introduisant la tige 31 dans le palier 15 et en orientant le couvercle 3 de telle sorte que la jupe inférieure 33 soit alignée avec le récipient de travail 2, ainsi que cela est illustré sur la figure 9A. Si l'utilisateur lâche le couvercle 3, sans exercer de pression sur ce dernier, le couvercle 3 descend verticalement jusqu'à une position d'attente dans laquelle l'extrémité inférieure du couvercle 3 est en butée contre l'extrémité supérieure du doigt 60 du loquet 6, le ressort de rappel 61 du loquet 6 étant dimensionné de telle sorte que le loquet 6 reste en position relevée sous la pression du seul poids du couvercle 3.

De manière préférentielle, et comme on peut le voir sur la figure 9A, la jupe inférieure 33 du couvercle 3 est très légèrement engagée dans l'ouverture du récipient de travail 2 lorsque le couvercle 3 est en position d'attente de sorte que, dans cette position, le couvercle 3 ne peut pas être ouvert par un simple mouvement de rotation autour de la tige 31 mais au contraire doit être légèrement soulevé pour permettre l'ouverture du couvercle 3 par rotation, ainsi que cela est illustré sur la figure 6.

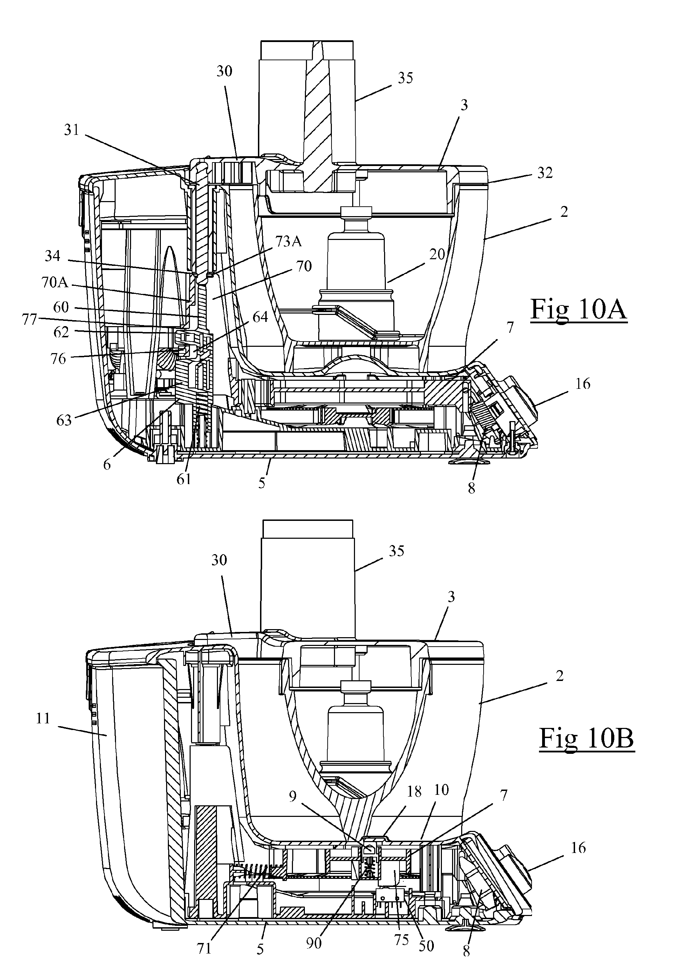

Les figures 10A et 10B illustrent la position des éléments du dispositif de verrouillage lorsqu'une pression manuelle est exercée sur le couvercle 3 pour l'amener manuellement dans une position de fermeture dans laquelle l'épaulement périphérique 32 du couvercle 3 repose sur le bord supérieur du récipient.

Conformément à la figure 10A, la descente manuelle du couvercle 3 vers sa position de fermeture est accompagnée d'un déplacement de la tige 31 vers le bas qui repousse le loquet 6 vers sa position enfoncée dans laquelle la butée 62 se trouve en regard d'une ouverture 77 du logement 70 et le bras transversal 76 se trouve en regard d'une découpe 64 du loquet 6 de sorte que le chariot 7 peut se déplacer transversalement en direction de la face avant de l'appareil, sous la pression exercée par le ressort 71, pour occuper sa position de verrouillage. Dans cette position de verrouillage, le chariot 7 se trouve dans une position avancée dans laquelle les bords 73A de l'encoche 73 du logement 70 sont engagés dans la gorge 34 de la tige 31 et verrouillent le couvercle 3 en position fermée en empêchant toute translation verticale de la tige 31.

Lors de ce déplacement du chariot 7 vers la position de verrouillage, le basculeur 8 pivote atour d'un axe 82 et se rapproche du bouton de déverrouillage 16 de la face avant du boîtier 1.

Conformément à la figure 10B, le déplacement du chariot 7 s'accompagne du déplacement du verrou 9 sous le renflement 18 du socle 10 et de l'actionnement de l'interrupteur de sécurité 50 par la came inférieure 75 du chariot 7. Le moteur 4 de l'appareil peut alors être mis en marche en toute sécurité en actionnant le bouton de commande 12.

Lorsque l'utilisateur a fini sa préparation et souhaite ouvrir le couvercle 3, il appuie sur le bouton de déverrouillage 16 de manière à ce que l'ergot d'actionnement 16A appuie sur le basculeur 8 et fasse pivoter ce dernier en entraînant le déplacement du chariot 7 à l'encontre du ressort de rappel 71 jusqu'à ce que le chariot 7 retrouve sa position de déverrouillage illustrée à la figue 9A, ce déplacement entraînant l'ouverture de l'interrupteur de sécurité 50 et donc l'arrêt du moteur 4 même si ce dernier n'a pas été au préalable interrompu au moyen du bouton de commande 12. Lorsque le chariot 7 atteint cette position reculée, l'encoche 73 du logement 70 se trouve en dehors de la gorge 34 de la tige 31 et la pression exercée par le ressort 61 provoque le déplacement du loquet 6 dans sa position relevée et donc la remontée automatique du couvercle 3 dans sa position d'attente.

Le couvercle 3 peut alors être ouvert en soulevant légèrement ce dernier pour faire passer sa jupe inférieure 33 au dessus du récipient de travail 2, puis en faisant pivoter le couvercle 3 autour de la tige 31, ainsi que cela est illustré sur la figure 6.

Une telle manipulation présente l'avantage de ralentir l'accès au contenu du récipient et d'augmenter la sécurité de l'appareil en imposant une manipulation supplémentaire pour ouvrir le couvercle 3. De cette manière, l'utilisateur ne peut avoir un accès trop rapide au contenu du récipient de travail 2 et il n'y a donc pas de risque que l'outil rotatif 20 soit encore en train de tourner sur sa propre inertie lors de l'ouverture du couvercle 3.

L'appareil ainsi réalisé présente donc l'avantage d'une grande ergonomie d'utilisation en permettant le verrouillage automatique du couvercle en position fermée lorsque ce dernier est amené par un simple mouvement de translation rectiligne coaxialement au récipient de travail. L'appareil présente également l'avantage de permettre le maintien du couvercle en position ouverte par rotation autour de la tige de sorte que l'utilisateur peut avoir accès au contenu du récipient de travail sans nécessairement retirer le couvercle de l'appareil, ce qui évite d'avoir à poser le couvercle sur le plan de travail avec les problèmes d'encombrement et de salissure que cela peut engendrer.

De plus, un tel dispositif de verrouillage du couvercle ne nécessite que la présence d'une tige à la périphérie du couvercle associée à un dispositif de verrouillage intégré dans le boîtier de l'appareil de sorte que les moyens de maintien du couvercle peuvent rester discrets et être intégrés esthétiquement à l'appareil.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation de l'invention non représentée, la position d'attente du couvercle pourra être choisie de telle sorte que le couvercle puisse être ouvert simplement en le faisant pivoter autour de la tige, sans avoir à le soulever davantage. Dans ce cas, l'appareil sera avantageusement équipé d'un frein garantissant un arrêt ultra rapide de l'outil avant ouverture du couvercle. Une solution alternative pourra également consister à équiper le chariot et/ou le loquet d'un système freinage assurant un déplacement lent et doux du chariot et/ou du loquet, pour obtenir un soulèvement lent et progressif du couvercle.

## Revendications

1. Appareil électroménager de préparation culinaire comportant un récipient de travail (2) fermé par un couvercle (3) amovible et un boîtier (1) comprenant un socle (10) de réception dudit récipient de travail (2), ledit boîtier (1) renfermant un moteur (4) pour l'entraînement d'un outil rotatif (20) disposé dans le récipient de travail (2), ledit appareil comportant des moyens de maintien du couvercle (3) en position fermée s'activant automatiquement lorsque le couvercle (3) est fermé par un mouvement de translation rectiligne en direction du récipient de travail (2), **caractérisé en ce que** lesdits moyens de maintien comportent un palier (15) dans lequel vient s'introduire une tige (31) portée par le couvercle (3), ledit palier (15) assurant un guidage en translation rectiligne du couvercle (3) en direction du récipient de travail (2) lors de la fermeture du couvercle (3).

2. Appareil électroménager de préparation culinaire selon la revendication 1, **caractérisé en ce que** lesdits moyens de maintien comportent un dispositif de blocage de la tige (31) dans une position de fermeture du couvercle (3).

3. Appareil électroménager de préparation culinaire selon la revendication 2, **caractérisé en ce que** lesdits moyens de maintien comportent un bouton de déverrouillage (16) permettant de désactiver ledit dispositif de blocage.

4. Appareil électroménager de préparation culinaire selon l'une quelconque des revendications 2 à 3, **caractérisé en ce que** ledit dispositif de blocage comporte un chariot (7) mobile en translation entre une position de verrouillage, dans laquelle la tige (31) du couvercle (3) est bloquée en translation dans la position de fermeture du couvercle (3), et une position de déverrouillage dans laquelle la tige (31) du couvercle (3) peut coulisser librement dans le palier (15), ledit chariot (7) étant ramené par des moyens de rappel (71) dans la position de verrouillage.

5. Appareil électroménager de préparation culinaire selon la revendication 4, **caractérisé en ce que** le bouton de déverrouillage (16) permet de déplacer manuellement le chariot (7) à l'encontre des moyens de rappel (71) vers la position de déverrouillage.

6. Appareil électroménager de préparation culinaire selon l'une quelconque des revendications 2 à 5, **caractérisé en ce que** le dispositif de blocage comporte un élément d'arrêt (73A) bloquant la translation de ladite tige (31) à l'intérieur du palier (15) lorsque le couvercle (3) est en position fermée.

7. Appareil électroménager de préparation culinaire selon la revendication 6, **caractérisé en ce que** ledit élément d'arrêt (73A) est porté par le chariot (7) et vient s'engager dans une forme (34) de la tige (31) du couvercle (3) adaptée pour immobiliser axialement cette dernière lorsque le chariot (7) est déplacé de sa position de déverrouillage vers sa position de verrouillage.

8. Appareil électroménager de préparation culinaire selon l'une quelconque des revendications 4 à 7, **caractérisé en ce que** le chariot (7) vient actionner un interrupteur de sécurité (50) lorsqu'il est en position de verrouillage et **en ce que** le fonctionnement du moteur (4) est autorisé seulement lorsque l'interrupteur (50) est actionné.

9. Appareil électroménager de préparation culinaire selon l'une quelconque des revendications 4 à 8, **caractérisé en ce que** l'appareil comporte un dispositif de blocage du chariot (7) en position de déverrouillage qui est actif lorsque le récipient de travail (2) n'est pas disposé sur le socle (10), ledit dispositif de blocage étant désactivé par la mise en place du récipient de travail (2) sur le socle (10).

10. Appareil électroménager de préparation culinaire selon l'une quelconque des revendications 1 à 9, **caractérisé en ce que** le couvercle (3) est ramené par des moyens de rappel (61) dans une position d'attente dans laquelle le couvercle (3) est surélevé par rapport à la position de fermeture et dans laquelle une partie de la tige (31) reste engagée dans le palier (15).

11. Appareil électroménager de préparation culinaire selon la revendication 10, **caractérisé en ce que** le couvercle (3) comporte une jupe inférieure (33) qui reste partiellement engagée dans le récipient de travail (2) lorsque le couvercle (3) est en position d'attente.

12. Appareil électroménager de préparation culinaire selon l'une quelconque des revendications 1 à 11, **caractérisé en ce que** le couvercle (3) peut occuper une position d'ouverture dans laquelle une partie de la tige (31) reste engagée dans le palier (15) et dans laquelle le couvercle (3) peut pivoter autour de la tige (31) de manière à libérer l'accès au contenu du récipient de travail (2).

13. Appareil électroménager de préparation culinaire selon l'une quelconque des revendications 1 à 12, **caractérisé en ce que** le boîtier (1) comporte un caisson (11) s'étendant latéralement au récipient de travail (2) et **en ce que** le palier (15) est porté par le caisson (11).

14. Appareil électroménager de préparation culinaire selon la revendication 13, **caractérisé en ce que** le palier (15) débouche à l'extérieur du caisson (11) à hauteur de l'extrémité supérieure du récipient de travail (2) lorsque ce dernier est disposé sur le socle (10).

## Patentansprüche

1. Elektrohaushaltsgerät für kulinarische Zubereitungen, umfassend einen Arbeitsbehälter (2), der von einem abnehmbaren Deckel (3) verschlossen wird, und ein Gehäuse (1), das einen Sockel (10) zur Aufnahme des Arbeitsbehälters (2) umfasst, wobei das Gehäuse (1) einen Motor (4) für den Antrieb eines Drehwerkzeuges (20) einschließt, das im Arbeitsbehälter (2) angeordnet ist, wobei das Gerät Mittel zum Halten des Deckels (3) in geschlossener Position umfasst, die automatisch aktiviert werden, wenn der Deckel (3) durch eine geradlinige Schiebebewegung in Richtung Arbeitsbehälter (2) geschlossen wird, **dadurch gekennzeichnet, dass** die Haltemittel ein Lager (15) umfassen, in welches ein vom Deckel (3) getragener Stift (31) eingefügt wird, wobei das Lager (15) eine geradlinige Schiebeführung des Deckels (3) in Richtung Arbeitsbehälter (2) beim Schließen des Deckels (3) sicherstellt.

2. Elektrohaushaltsgerät für kulinarische Zubereitungen nach Anspruch 1, **dadurch gekennzeichnet, dass** die Haltemittel eine Vorrichtung zum Arretieren des Stiftes (31) in einer Schließposition des Deckels (3) umfassen.

3. Elektrohaushaltsgerät für kulinarische Zubereitungen nach Anspruch 2, **dadurch gekennzeichnet, dass** die Haltemittel einen Entriegelungsknopf (16) umfassen, der das Deaktivieren der Arretiervorrichtung ermöglicht.

4. Elektrohaushaltsgerät für kulinarische Zubereitungen nach einem der Ansprüche 2 bis 3, **dadurch gekennzeichnet, dass** die Arretiervorrichtung einen Schlitten (7) umfasst, der zwischen einer Verriegelungsposition, in der der Stift (31) des Deckels (3) in der Schließposition des Deckels (3) verschiebegesperrt ist, und einer Entriegelungsposition verschiebbar ist, in der der Stift (31) des Deckels (3) im Lager (15) frei gleiten kann, wobei der Schlitten (7) von Rückstellmitteln (71) in die Verriegelungsposition gebracht wird.

5. Elektrohaushaltsgerät für kulinarische Zubereitungen nach Anspruch 4, **dadurch gekennzeichnet, dass** der Entriegelungsknopf (16) das manuelle Verschieben des Schlittens (7) gegen die Rückstellmittel (71) in die Entriegelungsposition ermöglicht.

6. Elektrohaushaltsgerät für kulinarische Zubereitungen nach einem der Ansprüche 2 bis 5, **dadurch gekennzeichnet, dass** die Arretiervorrichtung ein Anschlagelement (73A) umfasst, das die Verschiebung des Stiftes (31) innerhalb des Lagers (15) sperrt, wenn sich der Deckel (3) in geschlossener Position befindet.

7. Elektrohaushaltsgerät für kulinarische Zubereitungen nach Anspruch 6, **dadurch gekennzeichnet, dass** das Anschlagelement (73A) vom Schlitten (7) getragen wird und in eine Form (34) des Stiftes (31) des Deckels (3) eingreift, die angepasst ist, um diesen axial zu arretieren, wenn der Schlitten (7) von seiner Entriegelungsposition in seine Verriegelungsposition verschoben wird.

8. Elektrohaushaltsgerät für kulinarische Zubereitungen nach einem der Ansprüche 4 bis 7, **dadurch gekennzeichnet, dass** der Schlitten (7) einen Sicherheitsschalter (50) betätigt, wenn er sich in Verriegelungsposition befindet, und dadurch, dass der Betrieb des Motors (4) nur dann zugelassen wird, wenn der Schalter (50) betätigt wird.

9. Elektrohaushaltsgerät für kulinarische Zubereitungen nach einem der Ansprüche 4 bis 8, **dadurch gekennzeichnet, dass** das Gerät eine Vorrichtung zum Arretieren des Schlittens (7) in Entriegelungsposition umfasst, die aktiv ist, wenn der Arbeitsbehälter (2) nicht auf dem Sockel (10) angeordnet ist, wobei die Arretiervorrichtung durch das Anbringen des Arbeitsbehälters (2) auf dem Sockel (10) deaktiviert wird.

10. Elektrohaushaltsgerät für kulinarische Zubereitungen nach einem der Ansprüche 1 bis 9, **dadurch gekennzeichnet, dass** der Deckel (3) von Rückstellmitteln (61) in eine Warteposition gebracht wird, in der der Deckel (3) in Bezug auf die Schließposition erhöht ist und in der ein Teil des Stiftes (31) im Lager (15) eingefügt bleibt.

11. Elektrohaushaltsgerät für kulinarische Zubereitungen nach Anspruch 10, **dadurch gekennzeichnet, dass** der Deckel (3) eine untere Schürze (33) umfasst, die im Arbeitsbehälter (2) teilweise eingefügt bleibt, wenn sich der Deckel (3) in Warteposition befindet.

12. Elektrohaushaltsgerät für kulinarische Zubereitungen nach einem der Ansprüche 1 bis 11, **dadurch gekennzeichnet, dass** der Deckel (3) eine Öffnungsposition einnehmen kann, in der ein Teil des Stiftes (31) im Lager (15) eingefügt bleibt und in der der Deckel (3) rund um den Stift (31) schwenken kann, so dass der Zugang zum Inhalt des Arbeitsbehälters (2) freigegeben wird.

13. Elektrohaushaltsgerät für kulinarische Zubereitungen nach einem der Ansprüche 1 bis 12, **dadurch gekennzeichnet, dass** das Gehäuse (1) ein Fach (11) umfasst, das sich seitlich vom Arbeitsbehälter (2) erstreckt, und dadurch, dass das Lager (15) vom Fach (11) getragen wird.

14. Elektrohaushaltsgerät für kulinarische Zubereitungen nach Anspruch 13, **dadurch gekennzeichnet, dass** das Lager (15) auf Höhe des oberen Endes des Arbeitsbehälters (2) vom Fach (11) nach außen mündet, wenn der Behälter auf dem Sockel (10) angeordnet wird.

## Claims

1. An electrical household food preparation appliance comprising a working container (2) closed by a removable lid (3) and a housing (1) having a base (10) for receiving said working container (2), said housing (1) containing a motor (4) for driving a rotary tool (20) arranged in the working container (2), said appliance comprising means for holding the lid (3) in the closed position being automatically activated when the lid (3) is closed by a rectilinear translation movement towards the working container (2), **characterised in that** said holding means comprises a bearing (15) into which is introduced a rod (31) carried by the lid (3), said bearing (15) guiding the lid (3) in rectilinear translation towards the working container (2) when the lid (3) is closed.

2. An electrical household food preparation appliance according to claim 1, **characterised in that** said holding means comprises a device for blocking the rod (31) in the closed position of the lid (3).

3. An electrical household food preparation appliance according to claim 2, **characterised in that** said holding means comprises an unlocking button (16) for deactivating said blocking device.

4. An electrical household food preparation appliance according to any one of claims 2 to 3, **characterised in that** said blocking device comprises a carriage (7) movable in translation between a locked position, wherein the rod (31) of the lid (3) is blocked in translation in the closed position of the lid (3), and an unlocked position wherein the rod (31) of the lid (3) can freely slide in the bearing (15), said carriage (7) being brought back by return means (71) to the locked position.

5. An electrical household food preparation appliance according to claim 4, **characterised in that** the unlocking button (16) enables to move the carriage (7) manually against the return means (71) towards the unlocked position.

6. An electrical household food preparation appliance according to any one of claims 2 to 5, **characterised in that** the blocking device comprises a stop member (73A) blocking the translation of said rod (31) inside the bearing (15) when the lid (3) is in closed position.

7. An electrical household food preparation appliance according to claim 6, **characterised in that** said stop element (73A) is carried by the carriage (7) and engages in a form (34) of the rod (31) of the lid (3) adapted to immobilise the latter axially when the carriage (7) is moved from its unlocked position to its locked position.

8. An electrical household food preparation appliance according to any one of claims 4 to 7, **characterised in that** the carriage (7) actuates a safety switch (50) when it is in locked position and **in that** the operation of the motor (4) is permitted only when the switch (50) is actuated.

9. An electrical household food preparation appliance according to any one of claims 4 to 8, **characterised in that** the appliance comprises a device for blocking the carriage (7) in the locked position, which is active when the working container (2) is not placed on the base (10), said blocking device being deactivated by the placement of the working container (2) on the base (10).

10. An electrical household food preparation appliance according to any one of claims 1 to 9, **characterised in that** the lid (3) is brought back by return means (61) to a waiting position wherein the lid (3) is raised compared to the closed position and wherein a portion of the rod (31) remains engaged in the bearing (15).

11. An electrical household food preparation appliance according to claim 10, **characterised in that** the lid (3) comprises a lower skirt (33) which remains partly engaged in the working container (2) when the lid (3) is in waiting position.

12. An electrical household food preparation appliance according to any one of claims 1 to 11, **characterised in that** the lid (3) can occupy an open position wherein a portion of the rod (31) remains engaged in the bearing (15) and wherein the lid (3) can pivot round the rod (31) so as to provide free access to the contents of the working container (2).

13. An electrical household food preparation appliance according to any one of claims 1 to 12, **characterised in that** the housing (1) comprises a chamber (11) extending laterally to the working container (2) and **in that** the bearing (15) is carried by the chamber (11).

14. An electrical household food preparation appliance according to claim 13, **characterised in that** the bearing (15) opens to the outside of the chamber (11) at the level of the upper end of the working container (2) when the latter is placed on the base (10).
